# EUROPEAN PATENT SPECIFICATION

(11) **EP 3 504 118 B1**
(45) Date of publication and mention of the grant of the patent: **05.10.2022**
(21) Application number: 17844012.9
(22) Date of filing: 24.08.2017
(51) Int. Cl.: B25J 11/00, B62D 55/065, B62D 55/24

(54) **HOLDING MEANS FOR HOLDING AN APPARATUS AGAINST A METALLIC SURFACE**
HALTEMITTEL ZUM HALTEN EINER VORRICHTUNG GEGEN EINE METALLISCHE OBERFLÄCHE
MOYEN DE MAINTIEN DESTINÉ À MAINTENIR UN APPAREIL CONTRE UNE SURFACE MÉTALLIQUE

(30) Priority: 26.08.2016 NO 20161367
(43) Date of publication of application: 03.07.2019
(73) Proprietor: Remotion AS, 4313 Sandnes (NO)
(72) Inventor: URRANG, Morten, 4014 Stavanger (NO)
(74) Representative: Håmsø Patentbyrå AS
(86) International application number: PCT/NO2017/050211
(87) International publication number: WO 2018/038622

(56) References cited:
- WO-A1-02/094645
- WO-A1-2015/003221
- ES-A1- 2 346 617
- FR-A1- 2 310 256
- FR-A5- 2 145 115
- GB-A- 2 150 512
- JP-A- H 042 592
- JP-A- H0 424 181
- JP-A- S57 172 887
- JP-U- S5 240 428
- KR-A- 20120 080 484
- KR-A- 20120 080 485
- US-A1- 2002 104 693
- US-A1- 2010 126 403
- US-A1- 2013 140 801
- US-A1- 2014 031 977
- US-A1- 2014 230 711
- US-B2- 7 624 827
- SAN-MILLAN ANDRES: "Design of a teleoperated wall climbing robot for oil tank inspection", 2015 23RD MEDITERRANEAN CONFERENCE ON CONTROL AND AUTOMATION (MED), IEEE, 16 June 2015 (2015-06-16), pages 255-261, XP033176477, DOI: 10.1109/MED.2015.7158759 [retrieved on 2015-07-14]
- TAVAKOLI MAHMOUD ET AL: "OmniClimbers: Omni-directional magnetic wheeled climbing robots for inspection of ferromagnetic structures", ROBOTICS AND AUTONOMOUS SYSTEMS, vol. 61, no. 9, 6 June 2013 (2013-06-06), pages 997-1007, XP028679361, ISSN: 0921-8890, DOI: 10.1016/J.ROBOT.2013.05.005 [retrieved on 2013-06-06]

## Description

### Technical field

The present application relates to a holding means for holding an apparatus against a metallic surface.

### Background

A steel hull of a vessel or of other installation requires operations to be made on it, namely an inspection, a maintenance or a repair operation. Such an operation can be cleaning it with a water jet, with a moving brush, with an ultrahigh water jet, cavitation or with any other cleaning means; performing construction work such as installing a sea chest plug or welding; performing at least one measurement in a certain location of the hull, for example for the purposes of executing a detailed survey; or capturing a video feed from a location on the hull.

Certain difficulties can be observed when performing such an operation. For example, one difficulty may be when the hull is immersed partially, which creates difficulties when reaching the part of the hull above the surface. Another difficulty may be, for example, related to the specific shape of the hull, which may vary substantially from structure to structure. A further difficulty may be, for example, related to the dimensions of a metallic hull, which are usually observed in structures with big dimensions, when compared to the size of the components used for performing the operation.

A known approach for performing an operation on a steel hull, involves the use of a Remote Operated Vehicle (ROV). The ROV is manoeuvred to the vicinity of the intended position on the hull, carrying the necessary components with it for performing the operation. It can be deployed either from a support vessel or from the structure of which the hull is part. This approach is well-known in the prior-art and is considered a proven technology. However, it has critical drawbacks that make impractical.

One of the drawbacks is that any surfaced portion of the hull cannot be reached by the ROV. Hence, an additional solution has to be used for performing the operation on the surfaced parts of the hull.

Another drawback, is that the ROV does not move in an effective manner when near the upper part of the submerged portion of the hull, known as the splash zone. This zone has challenging hydrodynamic conditions for the driving means of the ROV to tackle, in order keep the ROV in place in relation to the hull. One of the problems in this zone is that the ROV is neutral in water due to its buoyancy element, and therefore needs to be fully submerged in order to operate. Heave and water current bring the ROV, involuntarily, to surface. This can be partially overcome by waiting for the appropriate weather conditions to be achieved. However, if the solution depends on weather conditions, which can be quite strict, it might take a long time to achieve them. For example, in practice it was observed during an intervention to a hull in the North Sea, which required a weather limit of 2.0 m Hs, that it took ten days before the intended limit could be achieved. A scenario in which a structure such as a vessel has to wait for several days before certain weather conditions are achieved can become quite expensive, since during that period the vessel may have to endure through parking costs without generating any income from the usual commercial exercise of the vessel.

Another known approach is to send divers into the water to the perform a similar operation to the ROV. This approach is also well-known. Although, in certain circumstances, a diver might be quicker or more precise than a ROV, many of the drawbacks of the ROV are still observed in this approach. Any surfaced portion of the hull cannot be reached by the diver. Also, a diver must be careful and take into account the hydrodynamic conditions when moving in the splash-zone. Further, this approach significantly depends on the skills and experience of the diver. Moreover, some hulls when in operation, need to have thrusters running, which make this approach impossible due to high risk.

Documents KR 10-2012-0080484 A and KR 10-2012-0080485 A disclose cleaning robots adapted to reliably move on fully submerged curved metallic surfaces, like the bottom of a ship, without loosing the magnetic adhesion between the robots and the metallic surfaces. The magnetic attraction feature in both documents is only disclosed as possibly being a permanent magnet and the only advantage mentioned for this choice is that no separate power is required, which is disclosed in contrast to opting for an electromagnet. The main difference between the cleaning robots disclosed by the two documents is the number of traveling modules being used.

Document JP 4-24181 A is concerned with improving the magnetic means by eliminating "useless" magnets that are observed in prior art solutions including magnets incorporated along the continuous belt. The uselessness of a magnet is observed when the magnet is positioned on or being moved through the portion of the continuous belt that is not in contact with the metallic surface, which always constitutes at least half of the continuous belt. Thus, when a magnet is on that portion of the continuous belt, it contributes to the weight of the device without contributing to the attractive force, and therefore the magnet is considered to be useless.

Reference is herein made to the scientific article "Design of a teleoperated wall climbing robot fo oil tank inspection" by Andres San-Millan and disclosed during the 2015 23RD Mediterranean conference on control and automation (MED), IEEE, on 16 June 2015, page 255-261, XP033176477, DOI: 10.1109/MED.2015.7158759. This scientific article discloses a climbing robot with wheeled locomotion which uses permanent magnets as an adhesion mechanism. The robot can move on ferromagnetic walls. In the first paragraph in page 256, it is described that the aim of the work is to build a climbing robot that can carry a wireless camera to any desired point of an oil tank, which is the workspace of the robot. The paragraph describes further restrictions for the wall of the oil tank that must be in place when using the robot.

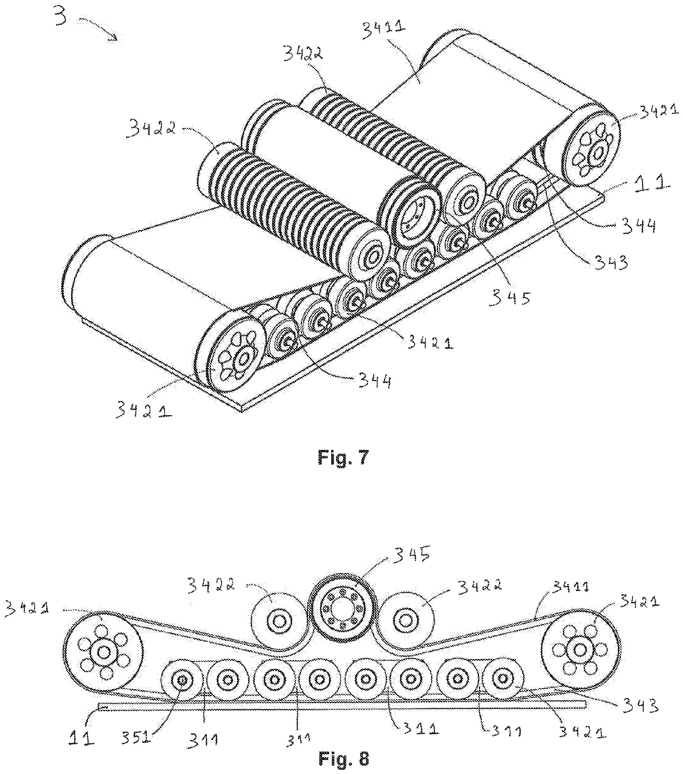

Reference is herein made to the scientific article "OmniClimbers: Omni-directional magnetic wheeled climbing robots for inspection of ferromagnetic structures" by Tavakoli Mahmoud et al. and disclosed in Robotics and autonomous systems, vol. 61, no. 9, pages 997-1007, XP028679361, ISSN: 0921-8890, DOI: 10.1016/J.ROBOT.2013.05.005. this scientific article discloses a climbing robot comprising 3 omni-directional wheels placed at 120 degrees form each other. In Figures 7 and 8, this article describes a robot wheel having a magnetic traction from fourteen fixed permanent magnets placed homogenously around the rotation axis of the robot wheel.

### General description

Described is an apparatus for performing an operation on a metallic surface. The metallic surface is an outer surface of a metallic hull and the metallic hull is part of a ship or of an offshore unit. The apparatus comprises:
- at least one holding means for holding the apparatus against the metallic surface;
- at least one pivot connected to the apparatus, arranged to pivot in a transverse axis in relation to the movement on the metallic surface for pivoting the at least one holding means in relation to the apparatus and for adapting the at least one holding means to a shape of the metallic surface; and
- a moving means for moving the apparatus on the metallic surface.

Also, the holding means comprises:
- at least one magnet arranged in a Halbach array for exerting a pushing force on the apparatus towards the metallic surface; and
- at least four rollers for allowing motion on the metallic surface and to keep a fixed distance between the at least one magnet and the metallic surface, each roller rotating on a shaft which traverses the at least one magnet.

Moreover, the moving means is arranged to bear the pushing force from the at least one magnet on the metallic surface and comprises:
- a continuous track belt with at least one inner guide engaging on an opposing groove presented by the rollers for keeping the continuous track aligned with the movement of the apparatus on the metallic surface; and
- at least two conducting means for conducting the continuous track belt, wherein the at least two conducting means comprise a groove for the at least one inner guide to engage thereon.

Furthermore, the apparatus is holdable against the metallic surface while partially immersed.

In one embodiment, the at least one pivot is connected to the apparatus and arranged to pivot in a longitudinal axis in relation to the movement of the apparatus on the metallic surface for pivoting the at least one holding means in relation to the apparatus.

In another embodiment, the continuous track belt is arranged around the at least one magnet, for keeping the at least one magnet separated from the metallic surface.

### Brief description of the drawings

So that the invention may be more readily understood, and so that further features thereof may be appreciated, embodiments of the invention will now be described by way of example with reference to the accompanying drawings.
Figure 1 is a schematic illustration showing an orthogonal projection of a first embodiment of the holding means against a metallic surface.
Figure 2 is a schematic illustration showing a side view of the first embodiment in the longitudinal direction of the same.
Figure 3 is a schematic illustration showing an orthogonal projection of a second embodiment of the holding means against a metallic surface, wherein the five permanent magnets are arranged in a Halbach array, as is shown by the arrows therein shown.
Figure 4 is a schematic illustration showing a side view of the second embodiment in the transverse direction of the same.
Figure 5 is a schematic illustration showing a side view of a third embodiment of the holding means against a metallic surface, in the transverse direction of the same, wherein a track belt is shown with inner guides.
Figure 6 is a schematic illustration showing another side view of the third embodiment shown in figure 5, in the longitudinal direction of the same.
Figure 7 is a schematic illustration showing an orthogonal projection of a fourth embodiment of the holding means against a metallic surface, wherein a track belt is shown being conducted around several instances of the holding means and also being driven by a central drum.
Figure 8 shows a schematic illustration showing a side view of the fourth embodiment in the longitudinal direction of the same.
Figure 9 shows a schematic illustration showing a side view of a fifth embodiment of the holding means against a metallic surface, in the longitudinal direction, while this embodiment moves over a protrusion in the metallic surface.
Figure 10 shows a schematic illustration similar to figure 9, with some components hidden.
Figure 11 shows a schematic illustration showing an orthogonal projection of an embodiment of an apparatus including a frame and four instances of the fourth embodiment shown in figures 7 and 8.
Figure 12 shows a schematic illustration similar to figure 11 including more components connecting the two pairs of instances of the fourth embodiment, the connections being done in the longitudinal direction.
Figures 13 to 15 show schematic illustrations of the embodiment of the apparatus including various holding means shown in figures 11 and 12, in three different positions of a metallic surface in relation to the waterline.
Figures 16 to 18 show the same schematic illustrations of figures 13 to 15 respectively from a side view.

### Detailed description

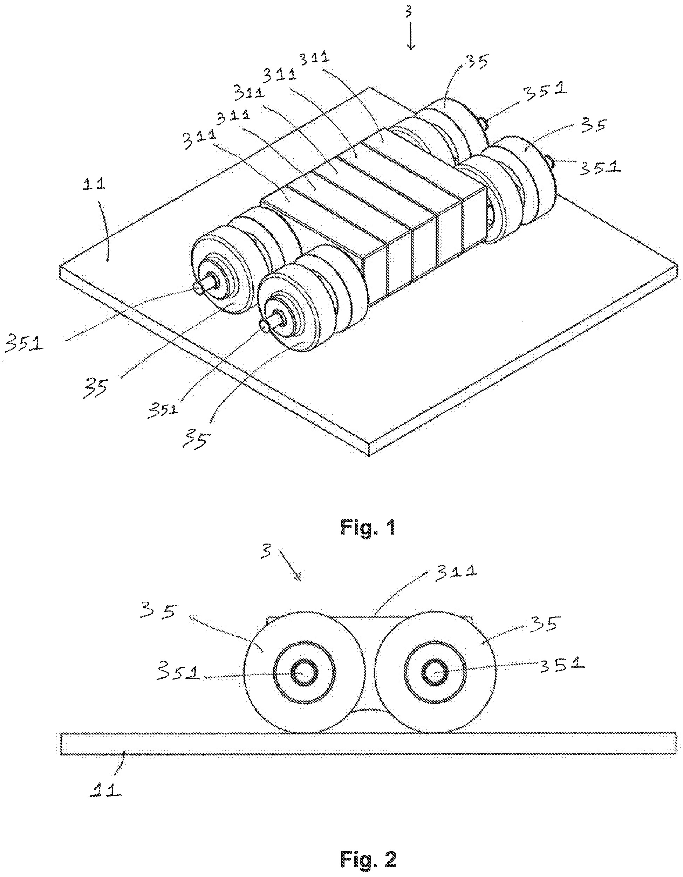

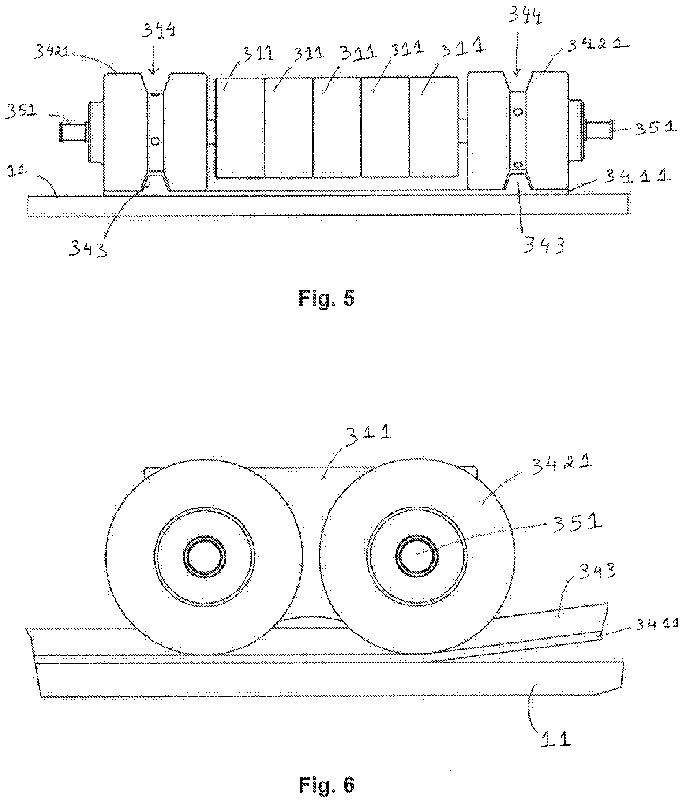

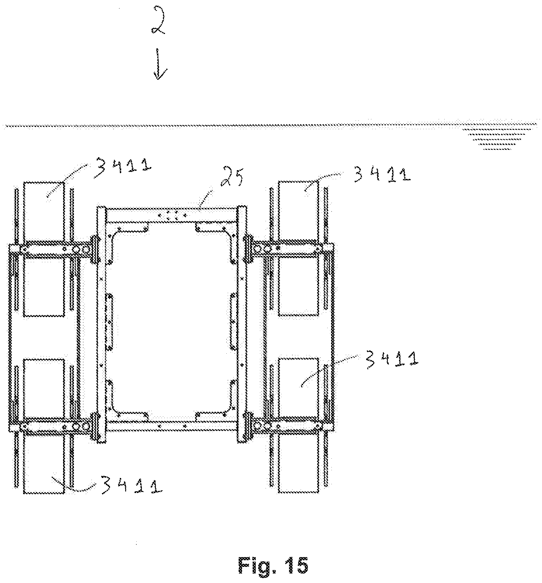

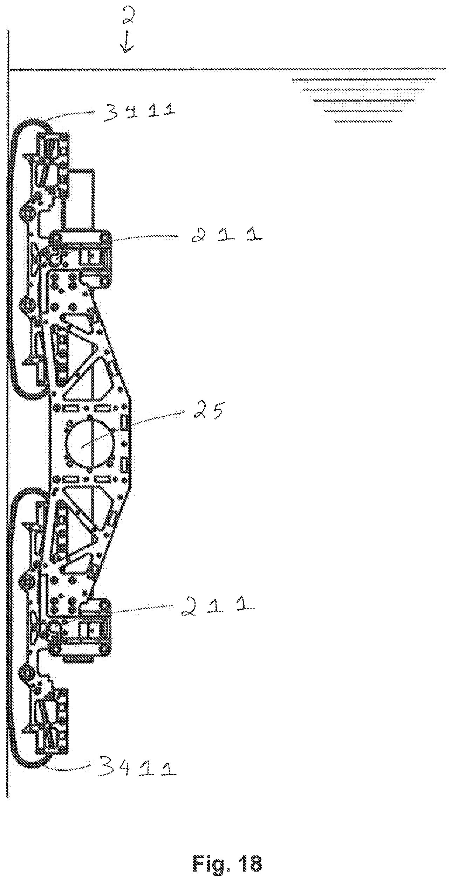

A first embodiment of a holding means 3 is shown in figure 1. This embodiment is incomplete in view of the claimed subject-matter, which includes a continuous track belt as illustrated in Figures 5-18 and explained below. The holding means 3 includes five permanent magnets 311 which are arranged in an array. The array is parallel to the metallic surface 11. Also included in this embodiment, are four wheels 35 for allowing motion on the metallic surface 11 and to keep a fixed distance between the permanent magnets 311 and the metallic surface 11. Each wheel 35 rotates on a shaft 351 which traverses the array of permanent magnets 311.

The wheels 35 are held against the metallic surface 11 due to a pushing force being exerted by the five permanent magnets 311, towards the metallic surface 11. This pushing force results from the magnetic attraction of the permanent magnets 311 towards the metallic surface 11. In this embodiment, the pushing force is transferred from the five permanent magnets 311 to the shafts 351, which then transfer it to the wheels 35 in contact with the metallic surface 11. Hence, at the same time the four wheels 35 and the shafts 351 sustain the pushing force against the metallic surface 11, they also enable the movement on the metallic surface 11.

If the permanent magnets 311 contact directly with the metallic surface 11, then, the wheels 35 do not bear the pushing force on the metallic surface 11. This can happen, for example, due to the wheels 35 being arranged with an insufficient diameter or due to the wheels being arranged with a shaft traversing the array of permanent arrays 311 in a position that would set the wheels 35 to far away from the metallic surface 11 in relation to the permanent magnets 311.

Hence, in this embodiment, the configuration of the diameter of a wheel 35 and of the position of its rotation axis in relation to the permanent magnets 311, allow arranging the wheels 35 for bearing the pushing force from the permanent magnets 311 on the metallic surface 11. This aspect can be better observed in figure 2, where a side view of figure 1 is shown.

Also, other types of magnetic means can be used, instead of a permanent magnet 311, for example an electromagnet.

Figure 2 shows a side view of the first embodiment, shown in figure 1, in the longitudinal direction of the motion enabled by the wheels 35. The distance between the metallic surface 11 and the closest surface of the permanent magnets 311 can be observed between the wheels shown. Since the permanent magnets 311 do not touch the metallic surface 11, then then pushing force is correctly exerted to the shafts 351 and wheels 35.

Moreover, since the diameter of the wheels 35 and the position of the shafts 351 in relation to the permanent magnets 311 is kept fixed, then, the distance between the surface of the permanent magnets 351 which is most proximal to the metallic surface 11 and the points of contact of the wheels 35 on the metallic surface 11, will be kept constant. This constant distance will be observed while the holding means 3 moves on the metallic surface 11.

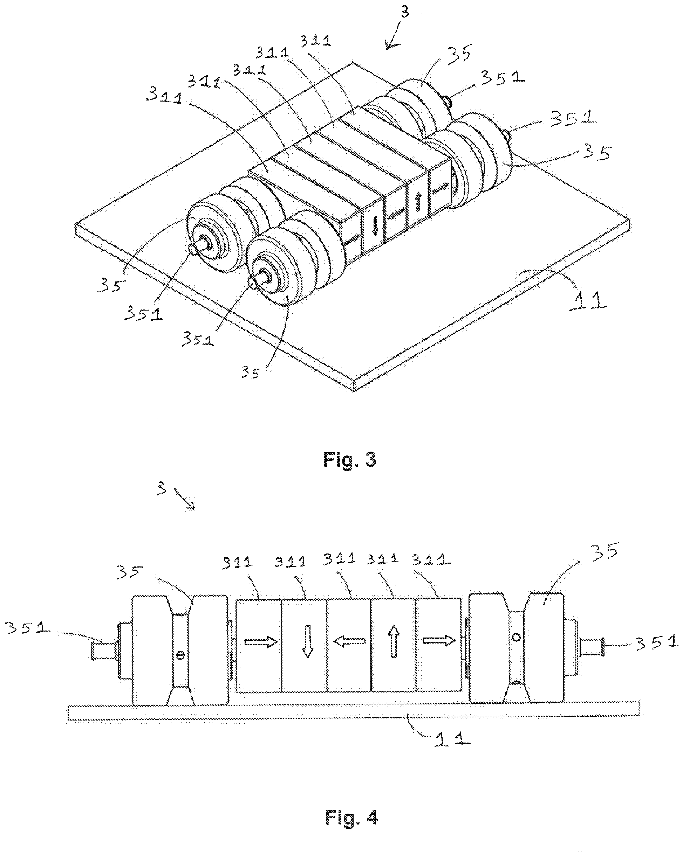

A second embodiment of the holding means 3 is shown in figures 3 and 4. In this embodiment, the permanent magnets 311 shown in the first embodiment are arranged in a Halbach array, which can be observed with the illustrative arrows drawn in figures 3 and 4. Each arrow represents the orientation of the magnetic field of each permanent magnet 351.

This rotating pattern of magnetisation augments the magnetic field facing the metallic surface while cancelling the magnetic field on the other side. In particular, the flux cancelled on one side reinforces the flux on the other side. Consequently, this arrangement allows achieving a stronger pushing force and, as a result, allowing, for example, to hold heavier weights against the metallic surface 11.

Other arrangements of the magnetic means could be achieved for changing the magnetic field. For example, a sub-optimal arrangement of the Halbach array can also be implemented.

In figures 5 and 6 a third embodiment of the holding means 3 is shown. This embodiment is similar to any of the previous embodiments, with the difference that it includes a continuous track system with a track belt 3411 for moving on the metallic surface 11, instead of the wheels 35 shown in any of the figures 1 to 4.

The continuous track system includes rollers 3421 for conducting the track belt 3411. These rollers 3421 are similar to the wheels 35 shown in figures 1 to 4, which directly contact the metallic surface 11. However, in this third embodiment, the track belt 3411 is the component that contacts directly with the metallic surface 11 and the rollers 3421 conduct the track belt 3411.

The track belt 3411 in this third embodiment is arranged around the permanent magnets 311. This allows keeping them protected from any metallic piece that might be floating in the water or that might be detached from the metallic surface 11 due to the magnetic attraction. In this way, the track belt 3411 works as a shield for the permanent magnets 311.

The track belt 3411 shown includes two inner guides 343, which engage on an opposing groove 344 presented by the roller 3421. This engagement allows keeping the track belt 3411 aligned with the movement on the metallic surface 11. Whenever the holding means 3 turns on the metallic surface 11, which happens at the same time the permanent magnets 311 exerts a pushing force that is transferred to the track belt 3411, the inner guides 343 make the track belt 3411 also turn. Also, a different number of inner guides 343, and the corresponding grooves 344, can also be implemented.

In the figures 7 and 8, a fourth embodiment is illustrated including a track belt 3411 being conducted around four instances of the holding means 3 shown in any of the figures 5 to 6. These instances work together, side by side, in exerting the pushing force. The track belt 3411 is conducted around the permanent magnets 311, including two inner guides 343, of which only one is visible, and several rollers 3421. Moreover, the track belt 3411 is also conducted around a driving drum 345 which allows driving the track belt 3411.

Some components have been hidden in the figures 7 and 8 for allowing a better visualization of the components surrounded by the track belt 3411. However, these may also be needed in order to keep any of the rotation axes of the conducting means fixed in relation to each other, namely the rollers 3421, the outer rollers 3422, and the driving drum 345. Moreover, in order to allow fine tuning the tension of the track belt 3411, at least one rotation axis of a conducting means may be adapted to include a mechanism for regulating its position.

In this fourth embodiment, the driving drum 345 transmits torque to the track belt 3411. The driving drum 345 engages the track belt 3411 from the inside, i.e. not on the surface of the track belt 3411 that contacts the metallic surface 11. For this effect, the driving drum 345 includes a rubber coating to ensure good grip and increase the coefficient of friction. Moreover, the two outer rollers 3422 are also included to ensure a good grip for the track belt 3411 around the driving drum 345. The positions of these outer rollers 3422 change the amount of force which is transmitted to the track belt 3411. Preferably, the track belt 3411 is guided at least 180 degrees around the driving drum 345.

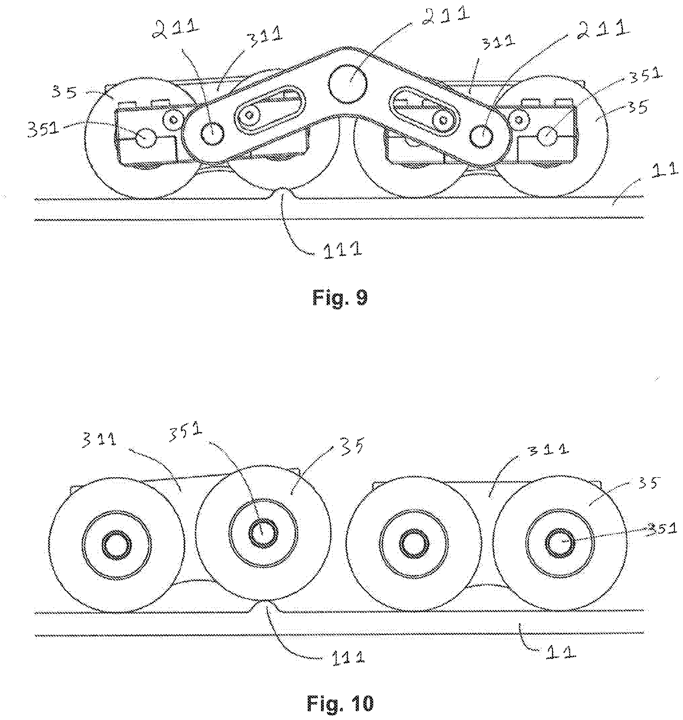

Figures 9 and 10 show a fifth embodiment of the holding means 3 including three pivots 211, each arranged to pivot in a transverse axis in relation to the movement on the metallic surface 11. This embodiment includes the wheels 35, but it could easily include a continuous track system instead, like the shown in any of the figures 5 and 6. Also, the rotation axis of the pivots 211 is parallel to the rotation axis of the wheels 35. Moreover, the pivots 211 connect to an apparatus and allow to adapt the holding means 3 to a shape of a metallic surface 11. For example, a hull of a ship is not a flat surface, presenting a curved shape in some parts. Also, the metallic surface 11 may have a protrusion 111, such as a welded joint. In such case, when this fifth embodiment passes over it, the pivots 211 work together to adapt the permanent magnets 311 accordingly. This adaptation is show in figure 9 and more clearly in figure 10.

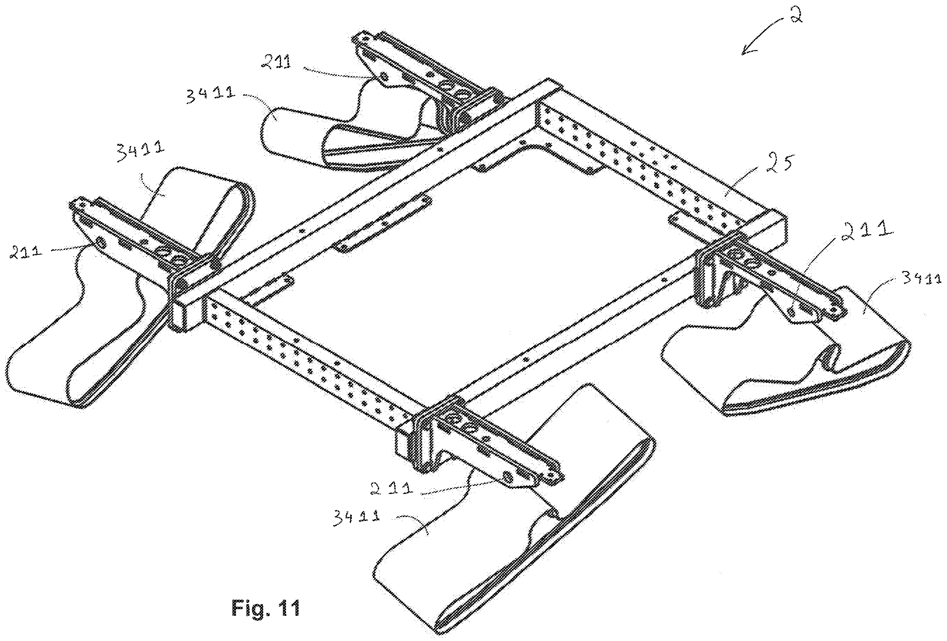

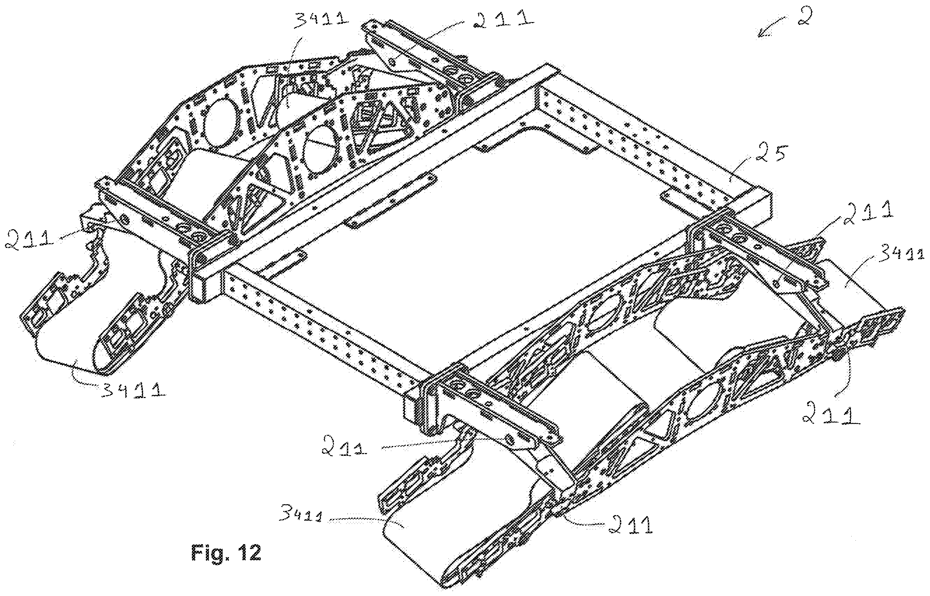

Figures 11 and 12 show an embodiment of an apparatus 2 including a frame 25 and four instances of the fourth embodiment shown in figures 7 and 8. Also included in this embodiment of the apparatus 2 are the pivots 211 for adapting the holding means 3 to different shapes of the metallic surface 11. Some of the pivots 211 pivot each instance of the fourth embodiment in a transverse axis, and others pivot each longitudinal pair of instances in a longitudinal axis.

The frame of the apparatus 2 may be used to carry any tools or devices needed for performing an operation on the metallic surface 11.

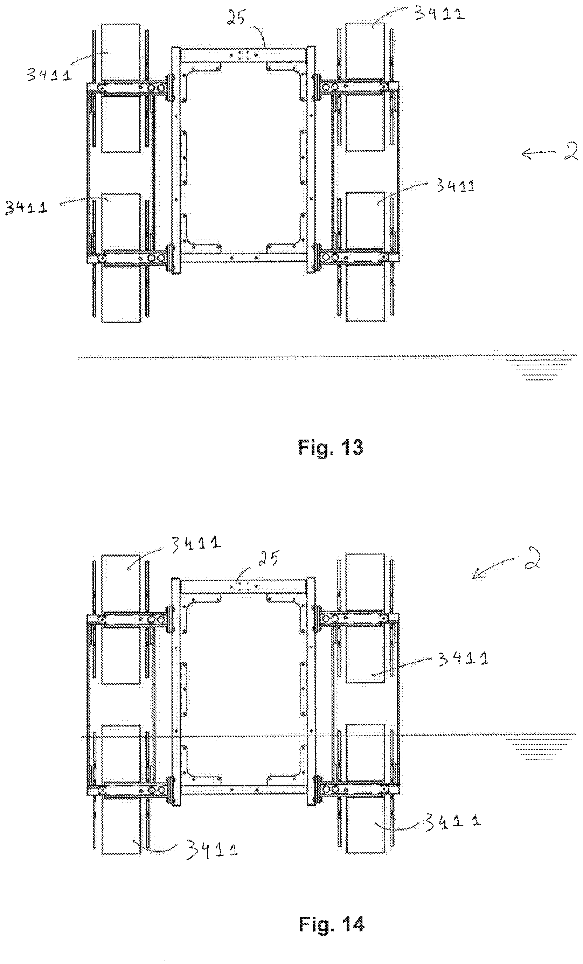

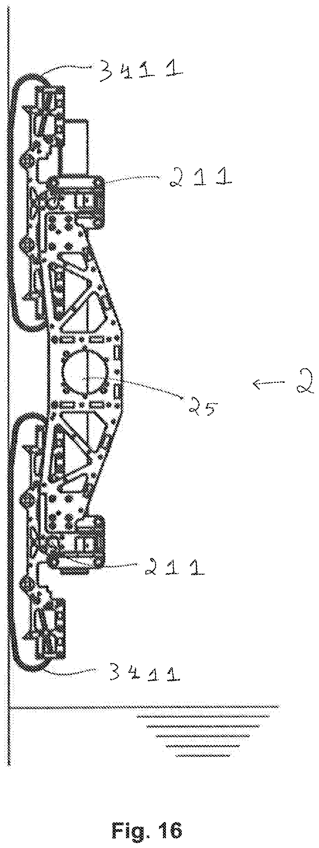

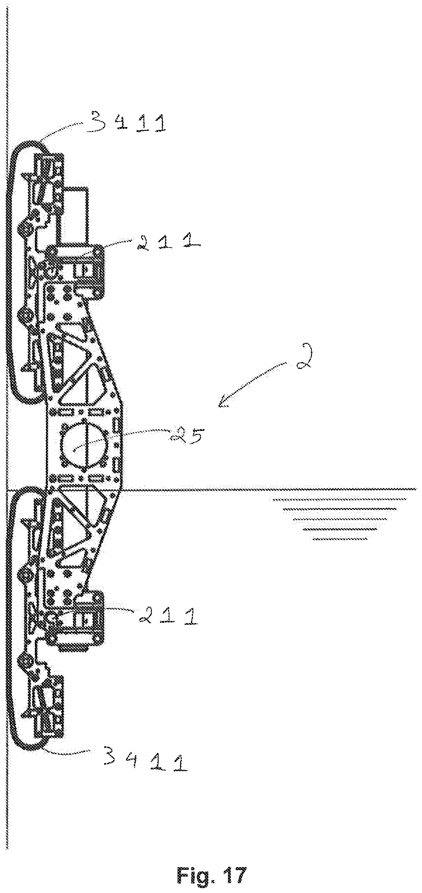

Figures 13 to 15 the embodiment of the apparatus 2 from figures 11 and 12, in three different positions of a metallic surface 11, for example a hull of an offshore unit, in relation to the waterline. Figures 16 to 18 show the same scenario of figures 13 to 15, respectively from a side view. An embodiment of an apparatus 2 including at least one instance of a holding means 3 can be used for performing an operation on a metallic surface which is partly submerged. For example, figures 14 and 17 illustrate the position of the apparatus 2 in the, so called, splash zone of the metallic surface 11. In this case, also the apparatus 2 is partly submerged, working under the complex hydrodynamic conditions observed thereon.

Any of the above embodiments can be used to perform an operation in a metallic hull. The metallic hull may be part of a vessel, such as a ship, or part of an offshore unit. An offshore unit is considered to be any structure engaged in offshore operations including drilling, oil and gas production and storage, accommodation and other support functions.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

## Claims

1. An apparatus (2) for performing an operation on a metallic surface (11), wherein the metallic surface (11) is an outer surface of a metallic hull and the metallic hull is part of a ship or of an offshore unit, the apparatus (2) comprising:
- at least one holding means (3) for holding the apparatus (2) against the metallic surface (11);
- at least one pivot (211) connected to the apparatus (2), arranged to pivot in a transverse axis in relation to the movement on the metallic surface (11) for pivoting the at least one holding means (3) in relation to the apparatus (2) and for adapting the at least one holding means (3) to a shape of the metallic surface (11); and
- a moving means for moving the apparatus (2) on the metallic surface (11),
wherein the holding means (3) comprises:
- at least one permanent magnet (311) arranged in a Halbach array for exerting a pushing force on the apparatus (2) towards the metallic surface (11); and
- at least four rollers (3421) for allowing motion on the metallic surface (11) and to keep a fixed distance between the at least one permanent magnet (311) and the metallic surface (11), each roller (3421) rotating on a shaft (351) which traverses the at least one permanent magnet (311),
wherein the moving means is arranged to bear the pushing force from the at least one magnet (311) on the metallic surface (11) and comprises:
- a continuous track belt (3411) with at least one inner guide (343) engaging on an opposing groove (344) presented by the rollers (3421) for keeping the continuous track (3411) aligned with the movement of the apparatus (2) on the metallic surface (11); and
- at least two conducting means (345, 3422) for conducting the continuous track belt (3411), wherein the at least two conducting means (345, 3422) comprise a groove (344) for the at least one inner guide (343) to engage thereon, and
wherein the apparatus (2) is holdable against the metallic surface (11) while partially immersed.

2. An apparatus according to the previous claim, wherein the at least one pivot is connected to the apparatus and arranged to pivot in a longitudinal axis in relation to the movement of the apparatus on the metallic surface for pivoting the at least one holding means in relation to the apparatus.

3. An apparatus according to claim 1, wherein the continuous track belt is arranged around the at least one magnet, for keeping the at least one permanent magnet separated from the metallic surface.

## Patentansprüche

1. Eine Vorrichtung (2) zur Durchführung eines Vorgangs auf einer Metalloberfläche (11), wobei die Metalloberfläche (11) eine äußere Oberfläche eines Rumpfes aus Metall ist und der Rumpf aus Metall Teil eines Schiffes oder einer Offshore-Anlage ist, wobei die Vorrichtung (2) umfasst:
- mindestens ein Haltemittel (3) zum Halten der Vorrichtung (2) gegen die Metalloberfläche (11);
- mindestens ein mit der Vorrichtung (2) verbundenes Drehgelenk (211), das so angeordnet ist, dass es sich auf einer zu der Bewegung auf der Metalloberfläche (11) quer verlaufenden Achse dreht, um das mindestens eine Haltemittel (3) in Bezug auf die Vorrichtung (2) zu drehen und um das mindestens eine Haltemittel (3) an eine Form der Metalloberfläche (11) anzupassen; und
- ein Bewegungsmittel zum Bewegen der Vorrichtung (2) auf der Metalloberfläche (11),
wobei das Haltemittel (3) umfasst:
- mindestens einen Dauermagneten (311), der in einem Halbach-Array angeordnet ist, um eine Druckkraft auf die Vorrichtung (2) in Richtung der Metalloberfläche (11) auszuüben; und
- mindestens vier Rollen (3421), um eine Bewegung auf der Metalloberfläche (11) zu ermöglichen und um einen festen Abstand zwischen dem mindestens einen Dauermagneten (311) und der Metalloberfläche (11) sicherzustellen, wobei sich jede Rolle (3421) auf einer Welle (351) dreht, die durch den mindestens einen Dauermagneten (311) läuft,
wobei das Bewegungsmittel so angeordnet ist, dass es die Druckkraft von dem mindestens einen Magneten (311) auf die Metalloberfläche (11) aufnimmt, und umfassend:
- ein Endlosband (3411) mit mindestens einer inneren Führung (343), das in eine gegenüberliegende Nut (344) der Rollen (3421) greift, um das Endlosband (3411) auf die Bewegung der Vorrichtung (2) auf der Metalloberfläche (11) auszurichten; und
- mindestens zwei Leitmittel (345, 3422) zum Leiten des Endlosbands (3411), wobei die mindestens zwei Leitmittel (345, 3422) eine Nut (344) für die mindestens eine innere Führung (343) aufweisen, um in diese zu greifen, und
wobei die Vorrichtung (2) gegen die Metalloberfläche (11) gehalten werden kann, während sie teilweise eingetaucht ist.

2. Eine Vorrichtung nach dem vorangehenden Anspruch, wobei das mindestens eine Drehgelenk mit der Vorrichtung verbunden und so angeordnet ist, dass es sich auf einer zu der Bewegung der Vorrichtung auf der Metalloberfläche längs verlaufenden Achse dreht, um das mindestens eine Haltemittel in Bezug auf die Vorrichtung zu drehen.

3. Eine Vorrichtung nach Anspruch 1, wobei das Endlosband um den mindestens einen Magneten herum angeordnet ist, um den mindestens einen Dauermagneten von der Metalloberfläche getrennt zu halten.

## Revendications

1. Un appareil (2) pour réaliser une opération sur une surface métallique (11), dans lequel la surface métallique (11) est une surface extérieure d'une coque métallique et la coque métallique fait partie d'un navire ou d'une unité offshore, l'appareil (2) comprenant :
- au moins un moyen de maintien (3) destiné à maintenir l'appareil (2) contre la surface métallique (11);
- au moins un pivot (211) connecté à l'appareil (2), arrangé pour pivoter sur un axe transversal par rapport au mouvement sur la surface métallique (11) pour pivoter le au moins un moyen de maintien (3) par rapport à l'appareil (2) et pour adapter le au moins un moyen de maintien (3) à une forme de la surface métallique (11); et
- un moyen mobile pour mouvementer l'appareil (2) sur la surface métallique (11),
dans lequel le moyen de maintien (3) comprend :
- au moins un aimant permanent (311) arrangé en réseau de Halbach pour exercer une force de poussée sur l'appareil (2) en direction de la surface métallique (11); et
- au moins quatre rouleaux (3421) pour permettre le mouvement sur la surface métallique (11) et pour maintenir une distance fixe entre le au moins un aimant permanent (311) et la surface métallique (11), chaque rouleau (3421) pivotant sur un arbre (351) qui traverse le au moins un aimant permanent (311),
dans lequel le moyen mobile est arrangé pour supporter la force de poussée du au moins un aimant (311) sur la surface métallique (11) et comprend :
- une courroie d'entraînement continue (3411) avec au moins un guide intérieur (343) s'emboitant dans une rainure opposée (344) présentée par les rouleaux (3421) pour maintenir la courroie d'entraînement (3411) alignée avec le mouvement de l'appareil (2) sur la surface métallique (11); et
- au moins deux moyens conducteurs (345, 3422) pour conduire le courroie d'entraînement continue (3411), dans lequel les au moins deux moyens conducteurs (345, 3422) comprennent une rainure (344) pour que le au moins un guide (343) s'y emboîte et
dans lequel l'appareil (2) peut être tenu contre la surface métallique (11) lorsqu'il est partiellement immergé.

2. Un appareil selon la revendication précédente, dans lequel le au moins un pivot est connecté à l'appareil et arrangé pour pivoter sur un axe longitudinal par rapport au mouvement de l'appareil sur la surface métallique pour pivoter le au moins un moyen de maintien par rapport à l'appareil.

3. Un appareil selon la revendication 1, dans lequel la courroie d'entraînement continue est arrangée autour du au moins un aimant, pour maintenir le au moins un aimant permanent séparé de la surface métallique.
